(19)

Europäisches
Patentamt
European
Patent Office
Office européen
des brevets

(11) **EP 4 253 441 A1**

(12) **EUROPEAN PATENT APPLICATION**

published in accordance with Art. 153(4) EPC

(43) Date of publication:
04.10.2023 Bulletin 2023/40

(21) Application number: 21897527.4

(22) Date of filing: 13.10.2021

(51) International Patent Classification (IPC):
*C08G 8/00* (2006.01)

(52) Cooperative Patent Classification (CPC):
C08G 8/00

(86) International application number:
PCT/JP2021/037861

(87) International publication number:
WO 2022/113549 (02.06.2022 Gazette 2022/22)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.11.2020 JP 2020195729

(71) Applicant: Sumitomo Bakelite Co., Ltd.
Shinagawa-ku
Tokyo 140-0002 (JP)

(72) Inventor: SUZUKI, Yuji
Tokyo 140-0002 (JP)

(74) Representative: Ter Meer Steinmeister & Partner
Patentanwälte mbB
Nymphenburger Straße 4
80335 München (DE)

(54) **PHENOLIC RESIN COMPOSITION AND METHOD FOR PRODUCING SAME**

(57) Provided is a phenolic resin composition containing a water-soluble resol-type phenolic resin and glycine, in which the phenolic resin composition is obtained through a step of reacting phenols and aldehydes, which are starting substances, in a presence of a basic catalyst under a condition that a molar ratio of [aldehydes]/[phenols] is 0.8 or more and 4.5 or less, to obtain a water-soluble resol-type phenolic resin, and a step of adding glycine to the resol-type phenolic resin in an amount of 0.001 mol% or more and less than 0.1 mol% with respect to the phenols as the starting substance, to obtain the phenolic resin composition.

EP 4 253 441 A1

## Description

### TECHNICAL FIELD

The present invention relates to a phenolic resin composition containing a water-soluble resol-type phenolic resin, and a method for producing the same. More specifically, the present invention relates to a phenolic resin composition in which contents of formaldehyde and phenol are reduced, and a method for producing such a phenolic resin composition.

### BACKGROUND ART

A phenolic resin is a typical thermosetting resin used in many fields due to high heat resistance and mechanical strength of a cured product thereof. The phenolic resin is used, for example, by impregnating or applying to various substrates, or as a binder for various organic and inorganic substrates. The phenolic resins are roughly divided into a novolac-type phenolic resin which is cured by heating with addition of a curing agent such as hexamethylenetetramine and a resol-type phenolic resin which is cured by heating alone, and the phenolic resin is used properly depending on the properties, applications, purpose, and the like.

Among these phenolic resins, in a case where ammonia-free or solvent-free is required for environmental friendliness and work environment improvement, the resol-type phenolic resin, which is highly hydrophilic, is usually used for applications used in a form of aqueous solution or emulsion. The water-soluble resol resin is used, for example, as a binder for coated abrasives. The resol resin is excellent in abrasive grain retention and heat resistance, and high abradability is obtained.

However, the resol-type phenolic resin contains unreacted phenols and aldehydes, which are undesirable substances from the viewpoint of protecting atmospheric environment and protecting human environment. In order to obtain a resol-type phenolic resin with a reduced formaldehyde content, it is sufficient to react an excessive amount of phenols with aldehydes. However, since the resol-type phenolic resin obtained by using the excessive amount of phenols contains a large amount of unreacted phenols, the resol-type phenolic resin is poorly cured, and in a cured product to be obtained, mechanical strength which is required by the market is not satisfied. In addition, since the resol-type phenolic resin obtained by using the excessive amount of phenols with respect to aldehydes contains a large amount of unreacted phenols, it is not preferable to use the resol-type phenolic resin in environmental and occupational safety.

As a technique for solving the above-described problem, Patent Document 1 discloses a method for producing a resol resin, in which amounts of unreacted monomers such as formaldehyde and phenol can be reduced. Patent Document 1 discloses a method for producing a liquid resin exhibiting a free phenol level of 0.5% or less, by blending 0.1 to 0.5 mol of glycine per 1 mol of a starting phenol in a phenol-formaldehyde condensate.

### RELATED DOCUMENT

### PATENT DOCUMENT

[Patent Document 1] Japanese Patent No. 6001536

### SUMMARY OF THE INVENTION

### TECHNICAL PROBLEM

However, in the method disclosed in Patent Document 1, there has room for further improvement in both improving water solubility of the obtained phenolic resin and reducing free formaldehyde and free phenol.

### SOLUTION TO PROBLEM

The present invention has been made in view of the above-described problems, and an object of the present invention is to provide a phenolic resin composition which has excellent handleability or workability due to high water solubility, in which residual amounts of both free phenol and free aldehyde, which are unreacted monomers, are remarkably reduced, and a method for producing such a phenolic resin composition.

According to the present invention, there is provided a phenolic resin composition containing a water-soluble resol-type phenolic resin and glycine, in which the phenolic resin composition is obtained through a step of reacting phenols and aldehydes, which are starting substances, in a presence of a basic catalyst under a condition that a molar ratio of [aldehydes]/[phenols] is 0.8 or more and 4.5 or less, to obtain a water-soluble resol-type phenolic resin, and a step of adding glycine to the resol-type phenolic resin in an amount of 0.001 mol% or more and less than 0.1 mol% with respect to the phenols as the starting substance, to obtain the phenolic resin composition.

In addition, according to the present invention, there is provided a method of producing a phenolic resin composition, including a step of reacting phenols and aldehydes, which are starting substances, in a presence of a basic catalyst under a condition that a molar ratio of [aldehydes]/[phenols] is 0.8 or more and 4.5 or less, to obtain a water-soluble resol-type phenolic resin, and a step of adding glycine to the resol-type phenolic resin in an amount of 0.001 mol% or more and less than 0.1 mol% with respect to the phenols as the starting substance, to obtain a phenolic resin composition.

ADVANTAGEOUS EFFECTS OF INVENTION

According to the present invention, there are provided a phenolic resin composition which has excellent handleability or workability due to high water solubility, in which residual amounts of both free phenol and free aldehyde are remarkably reduced, and a method for producing such a phenolic resin composition.

DESCRIPTION OF EMBODIMENTS

Hereinafter, embodiments of the present invention will be described.

(Phenolic resin composition)

The phenolic resin composition according to the embodiment of the present invention contains a water-soluble resol-type phenolic resin and glycine. The phenolic resin composition according to the embodiment of the present invention is obtained through a step of reacting phenols and aldehydes, which are starting substances, in a presence of a basic catalyst under a condition that a molar ratio of [aldehydes]/[phenols] is 0.8 or more and 4.5 or less, to obtain a water-soluble resol-type phenolic resin; and a step of adding glycine to the resol-type phenolic resin in an amount of 0.001 mol% or more and less than 0.1 mol% with respect to the phenols as the starting substance.

The phenolic resin composition according to the embodiment of the present invention contains a water-soluble resol-type phenolic resin and glycine. Since the phenolic resin composition according to the embodiment of the present invention contains glycine, amounts of free aldehyde and free phenol, which are unreacted residual monomers inevitably contained in the water-soluble resol-type phenolic resin, are reduced. Therefore, environmental load and load on the human body are reduced. It is not always clear why the glycine reduces the amounts of free aldehyde and free phenol, but it is considered that, by reacting or interacting the glycine with the free aldehyde and the free phenol in the phenolic resin composition, these free aldehyde and free phenol exist as inactive compounds.

In addition, since the phenolic resin composition according to the embodiment of the present invention contains the glycine, stability over time of the phenolic resin composition is improved. Here, the stability over time of the resin composition refers to that characteristics of the resin composition change little over time. The change in characteristics of the resin composition over time includes an increase in molecular weight of the phenolic resin contained in the resin composition and an increase in viscosity of the resin composition. Since the phenolic resin composition according to the embodiment of the present invention maintains its pH within a predetermined range due to buffering action of the glycine, the increase in molecular weight of the resol-type phenolic resin contained in the resin composition, or further polymerization reaction between unreacted free formaldehydes and free phenols are inhibited. Therefore, little or no increase in viscosity of the phenolic resin and changes in properties of the resin composition occur.

The phenolic resin composition according to the embodiment of the present invention contains a water-soluble resol-type phenolic resin, in which the water-soluble resol-type phenolic resin is a resol-type phenolic resin obtained through a step of reacting phenols and aldehydes, which are starting substances, in the presence of a basic catalyst under a condition that a molar ratio of [aldehydes]/[phenols] is 0.8 or more and 4.5 or less. The resol-type phenolic resin produced under the above-described condition has high water solubility, and thus the resin composition containing the resol-type phenolic resin has excellent handleability.

In the phenolic resin composition according to the embodiment of the present invention, the glycine is used in an amount of 0.001 mol% or more and less than 0.1 mol% with respect to the phenols as the starting substance used in the production of the resol-type phenolic resin. In the phenolic resin composition according to the embodiment of the present invention, even in a case where the glycine is used in a small amount, contents of free phenol and free aldehyde are reduced. Therefore, the phenolic resin composition according to the embodiment of the present invention is inexpensive because production cost is reduced.

(Method for producing phenolic resin composition)

The phenolic resin composition according to the embodiment of the present invention, containing a water-soluble resol-type phenolic resin and glycine, is obtained through the following (Step I) and (Step II) .

(Step I) step of reacting phenols and aldehydes, which are starting substances, in the presence of a basic catalyst under a condition that a molar ratio of [aldehydes]/[phenols] is 0.8 or more and 4.5 or less, to obtain a water-soluble resol-type phenolic resin
(Step II) step of adding glycine to the reaction mixture containing the resol-type phenolic resin obtained in (Step I) in an amount of 0.001 mol% or more and less than 0.1 mol% with respect to the phenols as the starting substance used in the step I

Examples of the phenols as the starting substance, which are used for the synthesis of the water-soluble resol-type phenolic resin in (Step I), include phenol; cresols such as o-cresol, m-cresol, and p-cresol; ethylphenols such as o-ethylphenol, methylphenol, and p-ethylphenol; butylphenols such as isopropylphenol, butylphenol, and p-tert-butylphenol; alkylphenols such as p-tert-amylphenol, p-octylphenol, p-nonylphenol, and p-cumylphenol; halogenated phenols such as fluorophenol, chlorophenol, bromophenol, and iodophenol; monovalent phenol substitutions such as p-phenylphenol, aminophenol, nitrophenol, dinitrophenol, and trinitrophenol; monovalent phenols such as 1-naphthol and 2-naphthol; and polyvalent phenols such as resorcin, alkylresorcin, pyrogallol, catechol, alkylcatechol, hydroquinone, alkylhydroquinone, phloroglucin, bisphenol A, bisphenol F, bisphenol S, and dihydroxynaphthalin. These may be used alone or in combination of two or more thereof.

Examples of the aldehydes as the starting substance, which are used for the synthesis of the water-soluble resol-type phenolic resin in (Step I), include formaldehyde, paraformaldehyde, trioxane, acetaldehyde, propionaldehyde, polyoxymethylene, chloral, hexamethylenetetramine, furfural, glyoxal, n-butylaldehyde, caproaldehyde, allylaldehyde, benzaldehyde, crotonaldehyde, acrolein, tetraoxymethylene, phenyl acetaldehyde, o-tolualdehyde, and salicylaldehyde. These may be used alone or in combination of two or more thereof. In addition, it is also possible to use precursors of these aldehydes or solutions of these aldehydes. Among these, from the viewpoint of production cost, it is preferable to use an aqueous solution of formaldehyde.

Examples of the basic catalyst used for the synthesis of the water-soluble resol-type phenolic resin in (Step I) include hydroxides of alkali metals or alkaline earth metals such as sodium hydroxide, potassium hydroxide, and calcium hydroxide; carbonates such as sodium carbonate and calcium carbonate; oxides such as lime; sulfites such as sodium sulfite; phosphates such as sodium phosphate; and amines such as ammonia, trimethylamine, triethylamine, monoethanolamine, diethanolamine, triethanolamine, hexamethylenetetramine, and pyridine.

Water is used as a reaction solvent used for the synthesis of the water-soluble resol-type phenolic resin in (Step I). By carrying out the reaction of (Step I) in an aqueous solvent, in the subsequent (Step II), the addition of water-soluble glycine is facilitated.

In (Step I), the reaction is carried out by charging the phenols and the aldehydes into a reaction kettle in a blending molar ratio (F/P) of the phenols (P) and the aldehydes (F) is 0.8 or more, preferably 0.8 or more and 4.5 or less, more preferably 0.9 or more and 3.0 or less, still more preferably 1.0 or more and 2.8 or less, and even more preferably 1.2 or more and 2.5 or less, adding the above-described basic catalyst as a polymerization catalyst, and refluxing the mixture for an appropriate time (for example, 3 to 6 hours). In a case where the blending molar ratio (F/P) of the phenols (P) and the aldehydes (F) is less than 0.8, a weight-average molecular weight of the water-soluble resol-type phenolic resin produced may be small, and the water-soluble resol-type phenolic resin may not have desired characteristics such as heat resistance. In addition, in a case where the blending molar ratio (F/P) of the phenols (P) and the aldehydes (F) is more than 4.5, since gelation of the resin tends to proceed during the reaction, reaction efficiency is lowered, and a water-insoluble high-molecular-weight resol-type phenolic resin is produced, which is not preferable. A reaction temperature is, for example, 40°C to 120°C, preferably 60°C to 100°C. As a result, the gelation can be suppressed and a water-soluble resol-type phenolic resin having a target molecular weight can be obtained. The weight-average molecular weight of the water-soluble resol-type phenolic resin is preferably 250 to 3,000, and more preferably 300 to 2,000. A resol-type phenolic resin having a molecular weight within the above-described range has water solubility, and thus has excellent handleability.

The basic catalyst used in (Step I) is used in an amount of, for example, 1 to 10 weight%, preferably 1 to 8 weight% and more preferably 2 to 5 weight% with respect to the phenols as the starting substance. By using the basic catalyst in an amount within the above-described range, the reaction efficiency between the phenols and the aldehydes can be improved, and thus the amounts of phenols and aldehydes remaining as unreacted products can be reduced.

Next, (Step II) is performed following (Step I). In (Step II), glycine is added to the reaction mixture containing the resol-type phenolic resin obtained in (Step I) in an amount of 0.001 mol% or more and less than 0.1 mol% with respect to the phenols as the starting substance used in (Step I). The amount of glycine added is preferably 0.001 mol% or more and 0.098 mol% or less, and more preferably 0.001 mol% or more and 0.095 mol% or less with respect to the phenols as the starting substance used in (Step I). By adding the glycine in an amount within the above-described range, the amounts of free aldehydes and free phenols remaining unreacted in (Step I) can be reduced. In addition, the amount of glycine used can be suppressed, which leads to savings in production costs.

In (Step II), it is preferable that the glycine is added to the reaction mixture obtained in (Step I) gradually over a given time. It is preferable that the addition of glycine is carried out at a temperature of 60°C to 75°C, preferably 60°C to 65°C, at an addition rate of, per 1 minute, 0.5 to 20 mass%, preferably 1 to 10 mass% and more preferably 2.8 mass% to 4 mass%, of the total amount of the glycine. Here, the glycine may be used in a form of an aqueous solution. Alternatively, the glycine may be used in a form of a metal salt such as a sodium salt.

After the addition of glycine, the temperature is preferably kept constant for an additional 10 to 180 minutes, preferably 30 to 100 minutes, to further reduce the unreacted free aldehydes and free phenols. Thereafter, the temperature of the reaction mixture is slowly cooled to approximately room temperature, thereby obtaining the phenolic resin composition according to the embodiment of the present invention.

In the phenolic resin composition obtained through the above-described steps, a content of unreacted free phenols is reduced to 5 mass% or less, preferably 2 mass% or less, more preferably 1 mass% or less, still more preferably 0.8 mass% or less, and even more preferably 0.6 mass% or less with respect to the entire phenolic resin composition.

In addition, in the phenolic resin composition obtained through the above-described steps, a content of unreacted free aldehydes is reduced to 5 mass% or less, preferably 2 mass% or less, more preferably 1 mass% or less, still more preferably 0.8 mass% or less, and even more preferably 0.6 mass% or less with respect to the entire phenolic resin composition.

The pH of the phenolic resin composition obtained through the above-described steps is close to neutral, for example, 5 to 10, preferably 6 to 8, more preferably 6.5 to 7.8, and still more preferably 6.8 to 7.5. Such pH is achieved by the presence of glycine in the resin composition. The phenolic resin composition according to the embodiment of the present invention has excellent stability over time by having a pH within the above-described range.

The embodiments of the present invention have been described above, but these are examples of the present invention and various configurations other than the above can be adopted.

EXAMPLES

Hereinafter, the present invention will be described with reference to Examples and Comparative Examples, but the present invention is not limited thereto.

(Example 1)

Into a reaction device with a stirrer, a reflux condenser, and a thermometer, 1000 parts by weight of phenol, 1638 parts by weight of 37% formalin aqueous solution (F/P molar ratio = 1.9), and 30 parts by weight of sodium hydroxide were charged, and the mixture was reacted at 90°C for 70 minutes. After adding 500 parts by weight of water thereto, 72 g of glycine (0.09 mol with respect to the phenol) was added thereto at 60°C, and dissolved to obtain a resin composition. The obtained resin composition was transparent, had a solid content of 48%, had a pH of 7.4, and had a water dilutability of 260% at 25°C.

In the resin composition, an amount of unreacted phenols was 0.7 mass%, and an amount of unreacted formaldehydes was below the detection limit (0.1 mass%), which were measured by gas chromatography. A change in viscosity of the resin composition over time was measured by a method described below, thereby evaluating the change over time. The results are shown in Table 1.

(Measurement of viscosity of resin composition after storage)

The stability over time of the resin composition was evaluated by measuring viscosity after storage for 1 month.

First, a viscosity of the above-described resin composition immediately after preparation was measured. Next, the resin composition was placed in a constant temperature bath at 30°C, and allowed to stand for 1 month. A viscosity of the resin composition after standing was measured. The viscosity was measured according to 5.3.2 viscosity B method of JIS-K-6910 "phenolic resin test method". Table 1 shows the viscosity before storage and the viscosity after storage. In addition, a viscosity increase rate (%) was calculated according to the following expression from the values of the viscosity before storage and the viscosity after storage.

$$\text{(Expression) Viscosity increase rate (\%)} = [\text{(Viscosity after storage)}/\text{(Viscosity before storage)}] \times 100$$

A smaller value of the viscosity increase rate indicates a better stability over time.

(Comparative Example 1)

Into a 2-liter reaction device with a condenser and a stirrer, 318.5 g of phenol (purity: 99%; 3.35 mol), 261.9 g of paraformaldehyde (purity: 96%; 8.37 mol), and 296.8 g of water were charged, and the mixture was heated to 45°C with stirring. A molar ratio of formaldehyde/phenol was 2.5.

47.4 g of sodium hydroxide as a 50% aqueous solution was added thereto over 30 minutes, and the temperature was gradually increased to 70°C over 30 minutes and kept for 120 minutes.

Thereafter, the temperature was lowered to 60°C over 30 minutes, and at the same time, 75 g of glycine (purity: 98%; 0.98 mol, 0.29 mol% with respect to the phenol) was added dropwise to the reaction mixture. The temperature was kept at 60°C for 90 minutes, and then the mixture was allowed to cool to approximately 20°C over 40 minutes.

The obtained reaction mixture (resin composition) was transparent, had a solid content of 55%, had a pH of 7.4, and had a dilutability in water of more than 2000% at 20°C.

In the resin composition, an amount of unreacted phenols was 0.25 mass%, and an amount of unreacted formaldehydes was below the detection limit (0.1 mass%), which were measured by gas chromatography. A change in viscosity of the resin composition over time was measured by the method as described in Example 1, thereby evaluating the change over time. The results are shown in Table 1.

(Comparative Example 2)

Into a 2-liter reaction device with a condenser and a stirrer, 282.3 g of phenol (purity: 99.7%; 2.99 mol), 244.9 g of paraformaldehyde (purity: 96%; 7.83 mol), and 277.6 g of water were charged, and the mixture was heated to 45°C with stirring. A molar ratio of formaldehyde/phenol was 2.61.

39.5 g of sodium hydroxide as a 50% aqueous solution was added thereto over 30 minutes, and the temperature was gradually increased to 70°C over 30 minutes and kept for 120 minutes.

Thereafter, the temperature was lowered to 60°C over 30 minutes, and at the same time, 66.52 g of glycine (purity: 99%; 0.88 mol, 0.29 mol% with respect to the phenol) was added dropwise to the reaction mixture. The temperature was kept at 60°C for 180 minutes, and then the mixture was allowed to cool to approximately 20°C over 30 minutes.

The obtained reaction mixture (resin composition) was transparent, had a solid content of 54.8 mass%, had a pH of 7.4, and had a dilutability in water of more than 2000% at 20°C.

In the resin composition, an amount of unreacted phenols was 0.04 mass%, and an amount of unreacted formaldehydes was 0.3 mass%, which were measured by gas chromatography. A change in viscosity of the resin composition over time was measured by the method as described in Example 1, thereby evaluating the change over time. The results are shown in Table 1.

[Table 1]

|  | Example 1 | Comparative Example 1 | Comparative Example 2 |
|---|---|---|---|
| Viscosity immediately after synthesis (mPa·s) | 90 | 80 | 120 |
| Viscosity after storage for 2 weeks at 30°C (mPa-s) | 220 | 460 | 590 |
| Viscosity increase rate (%) | 244 | 575 | 492 |

In the phenolic resin compositions of Examples, residual amounts of unreacted phenol and unreacted aldehyde were reduced, the change in viscosity before and after storage was reduced, and the handleability was excellent.

Priority is claimed on Japanese Patent Application No. 2020-195729, filed on November 26, 2020, the disclosure of which is incorporated herein by reference.

Claims

1. A phenolic resin composition comprising:

   a water-soluble resol-type phenolic resin; and
   glycine,
   wherein the phenolic resin composition is obtained through a step of reacting phenols and aldehydes, which are starting substances, in a presence of a basic catalyst under a condition that a molar ratio of [aldehydes]/[phenols] is 0.8 or more and 4.5 or less, to obtain a water-soluble resol-type phenolic resin, and a step of adding glycine to the resol-type phenolic resin in an amount of 0.001 mol% or more and less than 0.1 mol% with respect to the phenols as the starting substance, to obtain the phenolic resin composition.

2. The phenolic resin composition according to claim 1,
wherein a content of unreacted phenols is 5 mass% or less with respect to the entire phenolic resin composition.

3. The phenolic resin composition according to claim 1 or 2,
wherein a content of unreacted aldehydes is 5 mass% or less with respect to the entire phenolic resin composition.

4. The phenolic resin composition according to any one of claims 1 to 3,
wherein a pH is 5 to 10.

5. A method of producing a phenolic resin composition, comprising:

a step of reacting phenols and aldehydes, which are starting substances, in a presence of a basic catalyst under a condition that a molar ratio of [aldehydes]/[phenols] is 0.8 or more and 4.5 or less, to obtain a water-soluble resol-type phenolic resin; and
a step of adding glycine to the resol-type phenolic resin in an amount of 0.001 mol% or more and less than 0.1 mol% with respect to the phenols as the starting substance, to obtain a phenolic resin composition.

6. The method for producing a phenolic resin composition according to claim 5,
wherein a content of unreacted phenols in the phenolic resin composition is 5 mass% or less with respect to the entire phenolic resin composition.

7. The method for producing a phenolic resin composition according to claim 5 or 6,
wherein a content of unreacted aldehydes in the phenolic resin composition is 5 mass% or less with respect to the entire phenolic resin composition.

8. The method for producing a phenolic resin composition according to any one of claims 5 to 7,
wherein a pH of the phenolic resin composition is 5 to 10.

# EP 4 253 441 A1

| INTERNATIONAL SEARCH REPORT | International application No. |
|---|---|
| | **PCT/JP2021/037861** |

**A. CLASSIFICATION OF SUBJECT MATTER**

*C08G 8/00*(2006.01)i
FI: C08G8/00 A

According to International Patent Classification (IPC) or to both national classification and IPC

**B. FIELDS SEARCHED**

Minimum documentation searched (classification system followed by classification symbols)

C08G8/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-545829 A (DYNEA CHEMICALS OY) 26 December 2013 (2013-12-26) claims, paragraphs [0006], [0011], [0011]-[0016], [0037]-[0048], example 3 | 1-8 |
| A | US 6362275 B1 (ASHLAND INC.) 26 March 2002 (2002-03-26) | 1-8 |
| A | JP 2013-536311 A (SAINT-GOBAIN ISOVER) 19 September 2013 (2013-09-19) | 1-8 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 December 2021** | **14 December 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/037861**

| Patent document cited in search report | | | Publication date (day/month/year) | Patent family member(s) | | | Publication date (day/month/year) |
|---|---|---|---|---|---|---|---|
| JP | 2013-545829 | A | 26 December 2013 | US | 2013/0232884 | A1 | |
| | | | | claims, paragraphs [0008], [0018]-[0023], [0048]-[0060], example 3 | | | |
| | | | | WO | 2012/042040 | A1 | |
| | | | | CA | 2813110 | A1 | |
| | | | | CN | 103282395 | A | |
| US | 6362275 | B1 | 26 March 2002 | (Family: none) | | | |
| JP | 2013-536311 | A | 19 September 2013 | JP | 2016-180115 | A | |
| | | | | US | 2013/0183524 | A1 | |
| | | | | WO | 2012/025699 | A1 | |
| | | | | FR | 2964105 | A1 | |
| | | | | CA | 2809427 | A1 | |
| | | | | CN | 103221443 | A | |
| | | | | KR | 10-2013-0100117 | A | |
| | | | | JP | 6001536 | B2 | |

Form PCT/ISA/210 (patent family annex) (January 2015)

**REFERENCES CITED IN THE DESCRIPTION**

**Patent documents cited in the description**

- JP 6001536 B

- JP 2020195729 A